# EUROPEAN PATENT APPLICATION

(11) **EP 2 860 943 A1**
(43) Date of publication of application: **15.04.2015**
(21) Application number: 14188333.0
(22) Date of filing: 09.10.2014
(51) Int. Cl.: H04L 29/08, H04W 52/02

(54) **Push-Protocol Messaging System**

(30) Priority: 10.10.2013 IL 22883213
(71) Applicant: Deutsche Telekom AG, 53113 Bonn (DE)
(72) Inventor: Shapira, Bracha, 8472811 Beer Sheva (IL); Dayan, Aviram, 8496500 Omer (IL); Ackerman, Pavel, Cumming, Georgia 30041 (US); Yahalom, Ran, 8554500 Tlalim (IL); Mimran, Dudu, 6451613 Tel Aviv (IL); Elovici, Yuval, 7986400 Moshav Arugot (IL); Peylo, Christoph, 49401 Damme (DE)
(74) Representative: Maiwald Patentanwalts GmbH

(57) **Abstract**

The invention relates to a push-protocol messaging system for conveying messages from a messaging server to plurality of target mobile devices, which comprises: (A) a monitoring agent at each target mobile device for: (a.1) monitoring and collecting data regarding user behavior and status of the mobile device during various periods of the day; (a.2) conveying at least a portion of said collected data to a modem controller at the mobile device in order to establish data connection or to terminate this connection to said messaging server based on said collected data; and (a.3) conveying at least a portion of said collected data to said messaging server; and (B) a prioritizing unit at said messaging server for receiving said collected data separately from each target device, and prioritizing transmission of said messages to the target devices based on said collected data.

## Description

### Field of the Invention

The invention relates to the field of distribution of electronic messages to mobile devices. More specifically, the invention relates to a system for distributing messages to mobile devices, while minimizing battery consumption at the receiving mobile device.

### Background of the Invention

Messaging systems of cellular networks are widely used in the modern world. A mobile device of the 3G or 4G is adapted to receive several types of messages that are distinguished by the medium of transmission, for example, SMS messages are conveyed over a telephone line, while data messages are conveyed over a data connection (such as Wi-Fi or the cellular Internet connection). The present invention relates to the latter type of messaging system, i.e., to the system which conveys messages over the data connection of the device. Such type of messaging (hereinafter will be referred to as "data messaging") is used for variety of aspects such as news updates, weather updates, emergency messages, applications updates, professional messages, etc. Three major providers of a framework for such type of data massaging are Google, Apple, and Blackberry. Data messages are typically distributed from a provider server (the provider may be the application developer, a news agency, a weather website, etc.) to a mass number of mobile devices. The number of mobile devices that may be targeted to receive a single message may reach hundreds of thousands, or even millions. In many cases it is highly important to ensure that all or at least a vast majority of the targeted mobile devices receive the relevant message immediately or at least within a predefined period.

In order for the message to be received at a mobile device, a connection should be established between the provider server (the term "provider server" relates herein to the one or more servers that distributes the messages to all of the target devices) and the respective mobile device.

Each establishment of a data connection between the messaging server and a mobile device costs energy to the battery of the mobile device, as it requires activation of respective transmitter and receiver within the mobile device. Therefore, in order to save battery energy, it is preferable to minimize the periods of such connections. However, shortening of the connection periods causes delays in the transfer of messages to the mobile device, as clearly a message cannot be transferred when a connection does not exist. Therefore, there is a tradeoff between the connection periods and the energy consumption at the mobile device.

Typically, there are two protocols for messaging, each having its advantages and drawbacks respectively. A polling protocol is a case where a client application at the mobile device actively and periodically accesses the messaging server, checks whether the server has one or more messages for this specific client device, and in the affirmative case, the client polls the messages to the mobile device. An advantage of the polling protocol is that the user defines the rate and periods at which connections with the server are established and maintained, and in an indirect manner this definition also affects the battery consumption at the mobile device. A significant disadvantage of the polling protocol is that urgent messages cannot be conveyed to the mobile device at times of no connection. Another disadvantage is that energy is consumed even when there are no messages for transfer from the server to the client device.

A push messaging protocol is a case where a messaging server "pushes" messages to targeted mobile devices. Assuming that a connection between the server and a mobile device exists, the server pushes the message to the respective mobile device, at times as set by the server, and this procedure is repeated with respect to all the additional targeted devices. The main advantage of the push protocol resides in the fact that messages can be conveyed to the mobile device in a minimum delay (i.e., in "real time"). The push protocol, however, suffers from the disadvantage of being wasteful in terms of battery consumption at the mobile device, as it requires a persistent connection between the server and each mobile device, and as said, there are many mobile devices.

In view of the above, it becomes clear that the use of a push scheme is advantageous when the operator of the messaging server wishes to guarantee that a high percentage of the total messages (for example 98%) are received at the respective target mobile devices, and moreover, this protocol is advantageous for conveyance of emergency messages, particularly when there is a high necessity to assure that messages are received at the respective mobile devices within a very short period. It should be noted that the messaging server typically has a mechanism for verifying that a sent message is indeed received at a specific device, so if for some reason a message has not been received, the server may repeat sending of the message until it receives from the mobile device confirmation of receipt. This mechanism may be selectively activated by the server for some types of messages, as its activation clearly increases the load on the system.

Typically, the mobile device comprises a messaging router which receives data messages and maneuvers them to the appropriate target application at the mobile phone.

It is therefore an object of the present invention to provide a messaging system and method which is more efficient in terms of battery consumption at the target mobile phones.

It is another object of the present invention to provide a messaging system which is more reliable, and which can assure that the message reaches the target device within a predefined period.

It is yet another object of the present invention to provide a messaging system which optimizes the network traffic.

Other objects and advantages of the present invention will become apparent as the description proceeds.

### Summary of the Invention

The invention relates to a push-protocol messaging system for conveying messages from a messaging server to plurality of target mobile devices, which comprises: (A) a monitoring agent at each target mobile device for: (a.1) monitoring and collecting data regarding user behavior and status of the mobile device during various periods of the day; (a.2) conveying at least a portion of said collected data to a modem controller at the mobile device in order to establish data connection or to terminate this connection to said messaging server based on said collected data; and (a.3) conveying at least a portion of said collected data to said messaging server; and (B) a prioritizing unit at said messaging server for receiving said collected data separately from each target device, and prioritizing transmission of said messages to the target devices based on said collected data.

Preferably, said collected data involves one or more of: (a) times of the day in which the device is typically OFF; (b) a state in which the device is in movement; (c) a state in which the display is OFF; (d) a manner by which the user typically reacts to messages in general, or messages of specific nature in particular.

Preferably, an analysis of the collected data is performed at the messaging server and then conclusions are returned to the mobile device.

Preferably, an analysis of the collected data is performed at each mobile device, and then they are sent to the messaging server.

Preferably, an analysis of the collected data is performed partially at the mobile device and partially at the messaging server.

Preferably, the messaging server maintains a list which contains separate behavior and status data for each target device, and wherein the prioritization of sending messages is based on said list.

### Brief Description of the Drawings

In the drawings:
- Fig. 1 shows a basic structure of a typical messaging server;
- Fig. 2 discloses in very general terms a typical structure of a prior art push messaging system as provided at each mobile device;
- Fig. 3 discloses in very general terms a structure of a push messaging system 101 according to an embodiment of the present invention; and
- Fig. 4 shows a basic structure of the messaging system at the mobile device, according to the present invention.

### Detailed Description of Preferred Embodiments

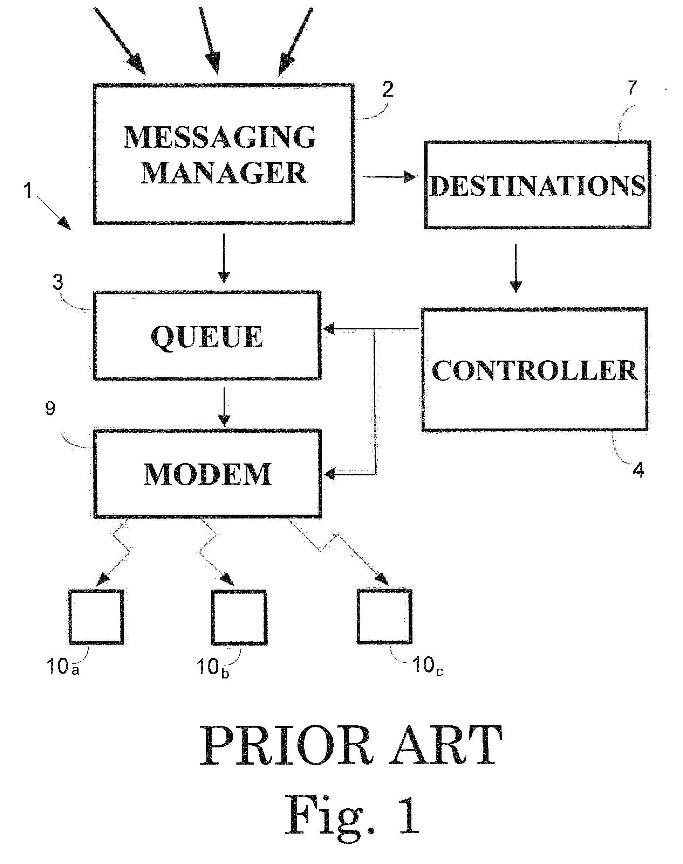

A basic structure of a typical messaging server 1 is shown in Fig. 1. Messages are received at the messaging manager 2 of the server from a plurality of message sources, each of said sources typically provides to the server the respective content of the message, as well as a list of target mobile devices 10. The number of mobile devices may range from few devices, and up to millions of devices or more, depending on the necessity as defined by the source. As noted above, it is typically desired to transfer the messages to the various mobile devices as soon as possible, and moreover, some types of messages, having an emergency nature, must be conveyed to all the destination devices essentially immediately. However, the fact that the messaging server has a limited throughput capability, forces the server 1 to use a queue. The system manager therefore pushes the message into the queue 3 in a specific order, according to some priority considerations. Controller 4, which receives from the messaging manager the list 7 of destinations for each message, controls the operation of queue 3 and of modem 9. In a case when a push protocol is used, the modem 9 conveys each message to all the respective target devices over a respective persistent connection for each specific mobile device 10. As is also well known in the art, the data connection between the server 1 and each of the mobile devices 10 includes passage through various cellular cells in a manner known in the art, and this passage may vary at times when the mobile device is in movement.

As also noted above, the push protocol is very costly in terms of battery consumption at the mobile device 10, as it requires keeping of a persistent data connection between each device and the messaging server 1.

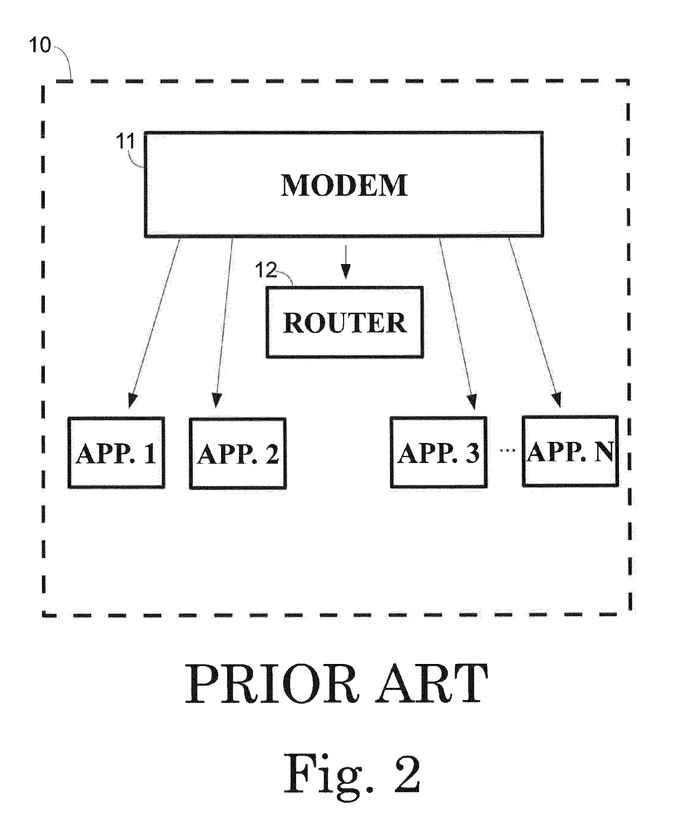

Fig. 2 discloses in very general terms a typical structure of a prior art push messaging system at each mobile device 10 (only elements of the mobile device that are relevant to the invention are shown in this figure). When a message is received via the data connection at the modem 11 of the device, the message is conveyed to router 12, which in turn routes the message to the respective target application (App. 1, App2... or App. N).

The controller 4 of the prior art messaging server (see Fig. 1) may prioritize the sending of messages, however, this is typically done based on internal and managing considerations at the messaging server 1, considerations that are independent of the mobile device operation, location and status, or of operation habits of the respective user of the device. The inventors of the present invention have found that the prioritizing of the sending of messages based on "global" considerations can provide a significant improvement to the efficiency of the messaging server, as well as a significant reduction to the battery consumption at the mobile device. By "global" considerations it is meant that the prioritizing of sending of messages from the messaging server to the target mobile devices is performed based on considerations that external to the messaging server. More specifically, the prioritizing of sending of the messages may depend, for example, on the manner of operation of each specific mobile device, on habits of the device user with respect to received messages, on the location and status of the device (i.e., whether the device is in movement, i.e., within a vehicle, or is stationary).

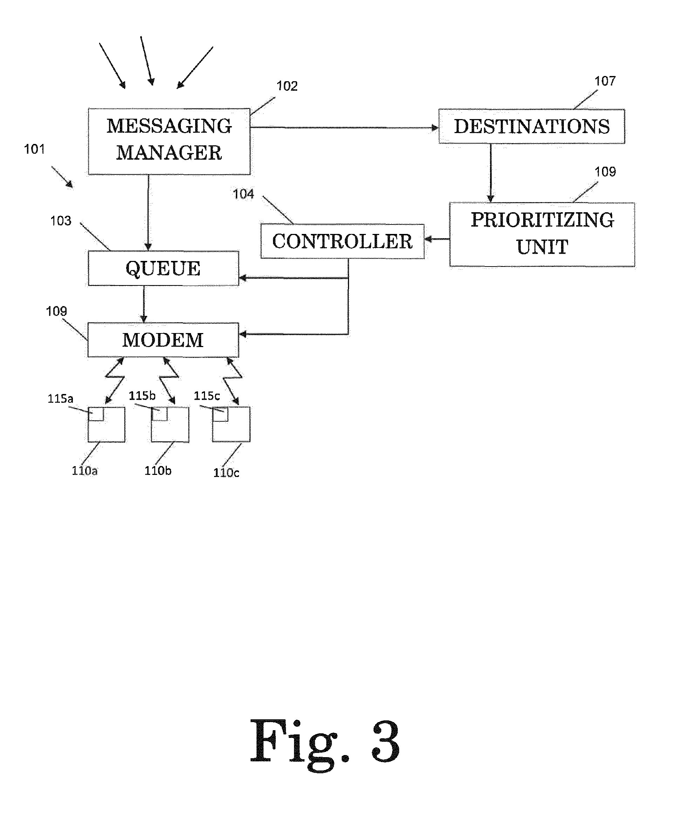

Fig. 3 discloses in very general terms a structure of a push messaging system 101 according to an embodiment of the present invention. Elements in Fig. 3 that have similar indications to those of Fig. 1 perform similar functionality, therefore, for the sake of brevity their functionality will not be repeated in detail. According to the present invention, each of the mobile phones 110 comprises a monitoring agent 115. Monitoring agent 115 collects data about the user habits with respect to opening received messages, checks the statuses of the device during times (for example, times of being ON Vs. times of being turned off), checks whether the device is in movement or stationary, etc. Said data, as collected by each respective agent 115, is conveyed to a prioritizing unit 109 at the messaging server, and it forms a basis for prioritizing the sending of messages to this respective mobile phone 110. Moreover, this collection of data may be used within the mobile phone for deciding when to maintain the data connection to the messaging server, and when to deactivate this data connection. More specifically, during times when the user is not expected to read messages, the rate and durations of connection to the messaging server are reduced.

The following are some examples for relevant data which may be collected by the mobile device agent 115 of the invention, and provided to the prioritizing unit 109, or alternatively considerations that may be used by the prioritizing unit 109:
a. Determination of non-use periods: If a mobile device agent 115 determines that the user never reads messages during nights (or specific periods of the day), the mobile device 110 disconnects the data connection to the messaging server101. This information which is transferred to the prioritizing unit 109 at the messaging server 101 will prevent sending messages to the respective mobile device 1110 at nights, and messages will be postponed to later periods when the data connection is active. Alternatively the data connection may be maintained for some short periods during nights to enable receipt, although limited, of messages such as emergency messages. This deactivation of the data connection to the server 101 (which according to the push protocol of the prior art is persistent) during long periods of non-use, saves a significant amount of battery at the mobile device 110.
b. Determination whether the device is in movement: in modern mobile phones it is relatively easy to determine whether the device 110 moves, or alternatively whether it is stationary. In some cases when it is determined that the device is in movement, it can be concluded that relatively frequent switching of the mobile phone to different cellular cells are expected. The switching from one cellular cell to another is relatively costly in terms of battery consumption. Therefore, a determination of a frequent switching may be used to disconnect the data connection between the respective device 110 and the messaging server 101, or alternatively to reduce the rates and periods of connection. As a result of this reduction, battery energy at the mobile device is saved. Similarly, if the device is moving fast enough, it may be concluded that the user of the device is during driving of a car, therefore he will not be capable of reading the message anyhow. Therefore, the connection to the server is not maintained during such determinations of movement, nor will messages be conveyed from the messaging server 101 during these periods (as the prioritizing unit will be informed on this movement occurrence of the device).
c. Determination whether the screen of the device is off: in order to save battery, the display of a modern mobile device 110 switches from time to time to an off state. Upon establishment of the data connection to the messaging server, and if at this specific time it is determined that the display is OFF, the transmission of the message from the messaging server is postponed to a later time in which the display is ON. On one hand the postponing of the message will prevent the device 110 from switching the display to an "ON" state upon receipt of the message, and it will also allow the server to give priority to messages to other target devices, and these latter devices will receive their messages earlier. It should be noted that this consideration should be used with care, depending on the message content. For example, if the message is of very high priority (for example, an emergency message), it may be sent to the mobile device even if the display is off. Otherwise, the message may be postponed to a time when the display is on. Such a decision can be made by the prioritizing unit, which receives the status of the device upon establishment of the data connection.
d. Determination how the user reacts to messages in general, or messages of specific nature in particular: If the agent 109 determines that the user of the mobile device does not at all open messages, or alternatively, that he does not open messages of a specific nature, or from a specific source, or that he typically does not open messages rapidly, this will be reported by the agent 115 of the mobile device to the prioritizing unit 109 of the messaging server 101. As a result, in such a case the message may be postponed to a later stage, giving priority to messages that are targeted to other mobile phones.

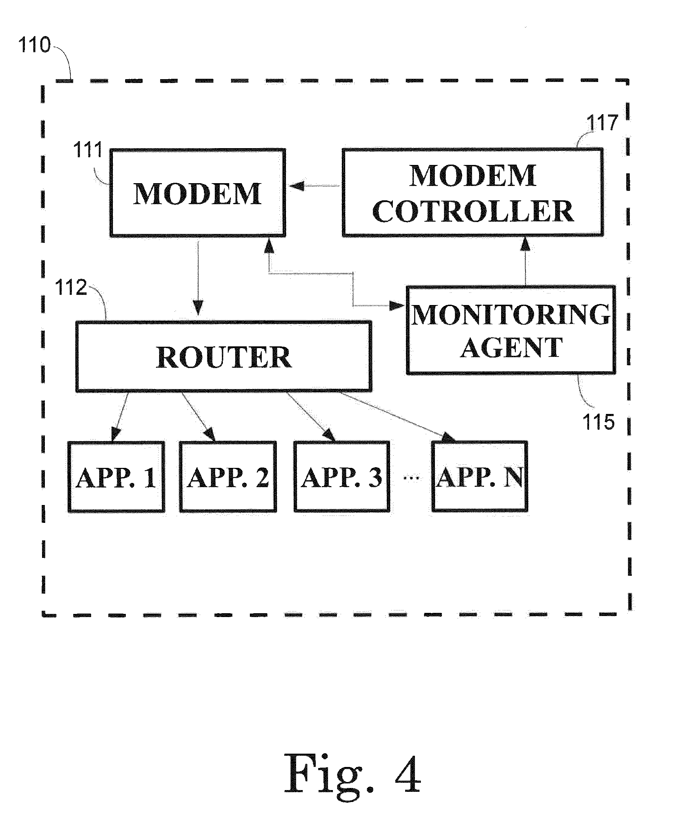

Fig. 4 shows the basic structure of the messaging system at the mobile phone 110, according to the present invention. In addition to the elements of the prior art messaging system, the system further comprises the monitoring agent 115, and a modem controller 117. As said, the monitoring agent monitors the manner by which the user reacts to received messages, his habits with respect to received messages, and the location and status of the device (i.e., whether the device is in movement, i.e., within a vehicle, or stationary, and times when the display is OFF). The collected data by the monitoring agent 115 is conveyed to the messaging server 101 via modem 111, in order to set prioritizing of sending new messages. Moreover, the collected data is analyzed at the mobile phone 110, and conclusions are made with respect to how frequently to establish the data connection with the messaging server, for how long, and how to vary the periods and rates of this connection with the messaging server 101 during time. The conclusions with respect to the periods and rates of connection are conveyed into the modem controller 117, which controls the modem 111 to connect or disconnect the data connection with the messaging server 101 respectively. In one embodiment, the analysis of said collected data, and reaching said conclusions are performed by the monitoring agent 115 at the mobile device 110. In an alternative embodiment, after transferring of the collected data to the messaging server, the analysis of the collected data is performed at the messaging server 101, and the conclusions are conveyed back to the monitoring agent 115 and modem controller 117, in order to set the frequency and periods of connections.

As shown, the monitoring agent 115 which checks the behavior and status at the mobile phone 101 of the present invention, together with the prioritizing agent 109 at the messaging server significantly improve the efficiency of the push messaging system, and enable a significant saving in terms of battery consumption at the mobile phone. As also shown, even though the system of the invention operates in a push protocol, the connection between the mobile phone and the messaging server is discontinuous, as it is be disconnected during significant periods, enabling a significant saving of battery energy at the mobile device. Moreover, by having knowledge at the messaging server 101 of the status and behavior of each target mobile device, the prioritizing of sending messages at the messaging server is improved.

While some embodiments of the invention have been described by way of illustration, it will be apparent that the invention can be carried out with many modifications variations and adaptations, and with the use of numerous equivalents or alternative solutions that are within the scope of persons skilled in the art, without departing from the spirit of the invention or exceeding the scope of the claims.

## Claims

1. A push-protocol messaging system for conveying messages from a messaging server to plurality of target mobile devices, which comprises:
a. a monitoring agent at each target mobile device for:
a1. monitoring and collecting data regarding user behavior and status of the mobile device during various periods of the day;
a2. conveying at least a portion of said collected data to a modem controller at the mobile device in order to establish data connection or to terminate this connection to said messaging server based on said collected data; and
a3. conveying at least a portion of said collected data to said messaging server;
and
b. a prioritizing unit at said messaging server for receiving said collected data separately from each target device, and prioritizing transmission of said messages to the target devices based on said collected data.

2. A push-protocol messaging system according to claim 1, wherein said collected data involves one or more of:
a. times of the day in which the device is typically OFF;
b. a state in which the device is in movement;
c. a state in which the display is OFF;
d. a manner by which the user typically reacts to messages in general, or messages of specific nature in particular.

3. A push-protocol messaging system according to claim 1 or 2, wherein an analysis of the collected data is performed at the messaging server and then conclusions are returned to the mobile device.

4. A push-protocol messaging system according to any one of the preceding claims, wherein an analysis of the collected data is performed at each mobile device, and then they are sent to the messaging server.

5. A push-protocol messaging system according to any one of the preceding claims, wherein an analysis of the collected data is performed partially at the mobile device and partially at the messaging server.

6. A push-protocol messaging system according to any one of the preceding claims, wherein the messaging server maintains a list which contains separate behavior and status data for each target device, and wherein the prioritization of sending messages is based on said list.
